(19) **Europäisches Patentamt / European Patent Office / Office européen des brevets**

(11) **EP 4 273 885 A1**

(12) ## EUROPEAN PATENT APPLICATION
published in accordance with Art. 153(4) EPC

(43) Date of publication:
**08.11.2023 Bulletin 2023/45**

(21) Application number: **21915939.9**

(22) Date of filing: **29.12.2021**

(51) International Patent Classification (IPC):
**G21C 15/00** (2006.01)   **G21C 17/10** (2006.01)
**G06F 30/17** (2020.01)

(52) Cooperative Patent Classification (CPC):
Y02E 30/30

(86) International application number:
**PCT/RU2021/000619**

(87) International publication number:
**WO 2022/146189 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020 RU 2020143962**

(71) Applicants:
• **Atomenergoproekt, Joint-Stock Company
Moscow, 107996 (RU)**
• **Science and Innovations - Nuclear Industry
Scientific Development, Private Enterprise
Moscow, 119017 (RU)**

(72) Inventors:
• **BEZLEPKIN, Vladimir Viktorovich
Saint Petersburg, 194223 (RU)**
• **KREKTUNOV, Oleg Petrovich
Saint Petersburg, 191119 (RU)**
• **KOLESNIK, Ilya Mikhailovich
Saint Petersburg, 196607 (RU)**
• **IVANOVA, Marina Vladimirovna
Saint Petersburg, 197198 (RU)**
• **IGNATIEV, Alexey Alexeyevich
Gatchina, Leningradskaya obl. 183306 (RU)**
• **SERGEEV, Alexandr Yuryevich
Vsevolozhskiy raion,
Leningradskaya obl.188689 (RU)**

(74) Representative: **Osmans, Voldemars et al
Agency Tria Robit
P.O. Box 22
LV-1010 Riga (LV)**

(54) **METHOD AND DEVICE FOR MONITORING A PASSIVE HEAT REMOVAL SYSTEM**

(57)   The invention relates to means for monitoring a system for the passive removal of heat from inside the containment of a pressurized water reactor. The claimed method includes examining the interior of individual sections of piping using visual inspection equipment; assessing additional fluid resistance in piping in an inaccessible section by analysing a forced circulation mode in a circulation loop; determining the proportion of blocked tubes from among the total number of tubes in a heat exchanger; and processing the data obtained in order to determine the state of the passive heat removal system. The claimed device comprises at least one cooling water circulation loop, and further comprises a heating tank partially filled with water and having electrical heating elements; a drain line including a tank for receiving water drained from the system; and measuring means. The technical result is an increase in the operating safety of a nuclear power station.

Fig. 1

EP 4 273 885 A1

## Description

### PERTINENT ART

The technical solution relates to the field of nuclear energy, particularly to the passive heat removal systems for the internal volume of the pressurized water reactor containment (the containment PHRS) and is intended to determine operability of the passive heat removal system for the internal volume of the pressurized water reactor containment and to prevent occurrence of any emergencies at nuclear power plants.

### PRIOR ART

Many designs of heat removal systems for the reactor containment with the use of natural heat circulation are known from the prior art.

A containment heat removal system comprising a heat exchanger installed under the containment with the inlet and outlet penetrating through the containment and connected to the closed low-boiling coolant loop including a turbine with a power generator located under the containment, a power unit with a steam generator and installations for the power unit safety assurance, one of them having a hydraulic device and a steam-water turbine, is disclosed in the Russian patent RU 2302674, G21C 9/00 dated 10.07.2007. A heat exchanger is installed under the containment dome and arranged in the form of circular pipes located in two tiers and connected to each other by C-shaped finned tubes with the ends directed towards the containment wall and covering a hydraulic device of a power unit safety installation.

A system comprising a coolant loop including at least one heat exchanger located inside the containment and a coolant storage tank installed above the heat exchanger outside the containment connected to each other with the supply and discharge pipelines is disclosed in the Russian utility model patent RU 85029, G21C 15/18 dated 20.07.2009. The system is also equipped with a steam receiving device installed in a coolant storage tank, hydraulically linked to the latter and connected to a discharge pipeline.

The system described in the Russian patent RU 2595639, G21C 15/00 dated 27.06.2016 is the closest analogue of the claimed invention. The system comprises a heat exchanger installed under the containment. The heat exchanger inlet and outlet penetrate through the containment and are connected to a closed low-boiling coolant circulation loop. The low-boiling coolant circulation loop includes a turbine with a power generator, a power unit with a steam generator and installations for the power unit safety assurance. One of the installations has a hydraulic device and a steam-water turbine. The power unit with the steam generator and the installations for the power unit safety assurance are located under the containment. The heat exchanger is installed under the containment dome. The heat exchanger is arranged in the form of circular pipes located in two tiers and connected to each other by C-shaped finned tubes. The ends of the tubes are directed towards the containment wall and cover a hydraulic device of the power unit safety installation.

### SUBSTANCE OF THE TECHNICAL SOLUTION

The objective of the claimed technical solution is to develop a method and a device for correct determination of operability of a passive heat removal system for the internal volume of a pressurized water reactor containment.

The technical result from application of this technical solution includes provision and acceleration of correct operability determination of the passive heat removal system for the internal volume of a pressurized water reactor containment and prevention of any emergency situation occurrences at nuclear power plants, and consequently, the enhancement of safety in the course of NPP operation as well as expansion of the analogue functionality.

This technical result is achieved through the use of the system monitoring data processing as well as through the introduction of changes to the design of the passive heat removal system for the internal volume of the pressurized water reactor containment enabling to carry out monitoring of the passive heat removal system for the internal containment volume.

One of the preferred options for embodiment of the claimed technical solution proposes a method for monitoring a passive heat removal system for the internal containment volume characterized, in that: visual examination of the system for any external damages is performed; the passive heat removal system loop is divided into two sections: accessible and inaccessible for inspection with the use of visual control means; the internal areas of individual pipeline sections are examined with the use of special-purpose visual control means; additional flow resistance in the pipeline at the inaccessible section is determined by investigation of the forced circulation mode in the loop; the fraction of blocked tubes in relation to their total number in the heat exchanger is determined; processing of any data obtained at the previous stages is carried out, and the state of the passive heat removal system for the internal containment volume is defined.

Contribution of the corrosive component may be additionally evaluated.

Processing of the data obtained at the previous stages and determination of the state of the passive heat removal system for the internal containment volume may be performed with the use of 3D modelling.

A device for the embodiment of the method for monitoring a passive heat removal system for the internal containment volume includes at least one cooling water loop comprising: a heat exchanger located inside the containment and including the upper and lower headers connected with heat exchange tubes, riser pipeline and a downpipe connected to the heat exchanger, a cooling water storage tank located above the heat exchanger outside the containment and connected to the downpipe, a steam dump valve connected to the riser pipeline, located in the water storage tank and hydraulically linked to the latter, characterized in that it additionally comprises: a heating tank with electrical heating elements partially filled with water, a discharge line including a receiving tank for the water drained from the system, measuring devices.

## BRIEF DESCRIPTION OF DRAWINGS

**Fig. 1 -** Dependence of pressure differential at an inaccessible section from the water flow rate in the loop at different values of additional flow resistance;

**Fig. 2** - Limit curve in the coordinates of additional flow resistance in the loop and the fraction of "disabled" heat exchange surface;

**Fig. 3** - Geometry of the computational region;

**Fig. 4** - Cross-section of the computational region (vertical section of the heat exchanger tubes);

**Fig. 5** - Lower section of the computational region, numeration of the heat exchanger tubes;

**Fig. 6** - Temperature fields for two different problem statements;

**Fig. 7** - Temperature fields for two different problem statements;

**Fig. 8** - Velocity fields for two different problem statements;

**Fig. 9** - Dependence of temperature differential in the heat exchanger tubes from the total flow rate in the system.

## DETAILED DESCRIPTION OF THE TECHNICAL SOLUTION

Certain terms to be further used for description of the technical solution will be considered below.
**NPP (nuclear power plant)** is a nuclear installation used for generation of electric (and in some cases thermal) energy with a nuclear reactor (reactors) and a set of the necessary structures and equipment.
**(Containment) PHRS** is a passive heat removal system for the internal volume of the pressurized water reactor containment at a NPP.
**EHRT** is an emergency heat removal tank.
**HE** is a heat exchanger.
**Three-dimensional model (3D model)** is a three-dimensional digital image of a facility. 3D models are created with the use of a special-purpose 3D modeling software.
According to this technical solution the technical result of its application for assurance and acceleration of correct determination of operability of the passive heat removal system for the internal containment volume of a pressurized water reactor and prevention of any emergency situation occurrences at nuclear power plants, and consequently, for safety enhancement in the course of the NPP operation, as well as for expansion of the analogue functionality is achieved by processing of the system monitoring data and also through the introduction of changes to the design of the passive heat removal system for the internal containment volume of a pressurized water reactor enabling to monitor the passive heat removal system for the internal containment volume.
In accordance with the proposed technical solution the method for monitoring a passive heat removal system for the internal containment volume is characterized in the following operations.

**Visual examination of the system for any external damages is performed.**

Operability (i.e. capability to perform its functions) of the containment PHRS is initially defined subsequent to the results of a series of experiments and numerical calculations. Deviations of the system characteristics from the design values can occur subsequent to transportation and installation of the system components. For example, damages of the HE pipelines and tubes (breakage, deformations) or their internal blockage (fouling, welding defects). Besides, corrosion of the component materials can begin to affect the system characteristics in the course of time. In all these cases the system operability can be impaired. Thus, operability of the containment PHRS shall be confirmed subsequent to installation as well as after completion of any repair works with replacement of the system components.

Apart from purely mechanical causes, deviation of the system characteristics from the design values may be caused by corrosion scale on the inner surfaces of the heat exchanger tubes forming in the course of the system operation.

Evaluation of the corrosive component contribution to thermal resistance to the heat flux from water in the heat exchanger tubes to the steam and gas medium in the containment under the design system operation mode: corrosion products within the space and on the surfaces of the system components are mainly represented by hematite: $Fe_2O_3$, the thickness of the hematite layer accumulated on the surfaces of the system components during the design service period (60 years) is: $\delta_H = 65 \cdot 10^{-9}$ m. Anisotropy is typical for the heat-conducting properties of hematite. The heat conductivity component measured parallel to the crystal optical axis is the minimum. Its value is the following: $\lambda_H = 12.1$ W/(m $\cdot$ K). Heat conductivity of the heat exchanger tube wall material is $\lambda_w = 15.06$ W/(m $\cdot$ K), the thickness of the heat exchanger tube walls is: $\delta_w = 3 \cdot 10^{-3}$ m. Reduction of the tube wall thickness due to corrosion may be conservatively neglected. The heat exchange coefficients from water to the tube walls and from the steam and gas medium to the tube walls in the design operation mode may be conservatively assessed as follows: $\alpha_1 < 1000$ W/(m$^2 \cdot$ K) and $\alpha_2 < 600$ W/(m$^2 \cdot$ K).

The total thermal resistance to heat transfer from the steam and gas medium to water may be presented as follows:

$$R_\Sigma = 1/\alpha_1 + 1/\alpha_2 + \delta_w/\lambda_w + \delta_H/\lambda_H$$

Thermal resistance of the hematite layer:

$$R_H = \delta_H/\lambda_H$$

Contribution of the corrosive component to thermal resistance to the heat flux under the design system operation mode may be evaluated as per the following thermal resistance ratio:

$$\varepsilon = R_H/R_\Sigma$$

Conservative evaluation may be obtained by inserting the numerical values of the parameters:

$$\varepsilon < \frac{65 \cdot 10^{-9}/12.1}{1/1000 + 1/600 + 3 \cdot 10^{-3}/15.06 + 65 \cdot 10^{-9}/12.1} \approx 1.85 \cdot 10^{-6}$$

Thus, the impact of corrosion on the system operation parameters within the design service life is negligible.

**The passive heat removal system loop is divided into two sections: accessible and inaccessible for inspection with the use of visual control means.**

The containment PHRS loop may be divided into two sections: accessible and inaccessible for inspection with the use of visual control means.

**The internal areas of individual pipeline sections are examined with the use of special-purpose visual control means.**

Presence of any external damages may be determined by visual examination. The internal areas of individual pipeline sections may be also inspected with the use of special-purpose visual control means (a mobile remote video camera). This is referred to the pipeline sections from the pipe cut-off in the tank to a certain obstacle (a damper or an abrupt bend) preventing from the camera movement through it. Other arrangements for inspection with regard to absence of any blockages in the internal areas shall be provided for any other pipeline sections inaccessible for inspection with the use of visual means as well as for the HE tubes.

**Additional flow resistance in the pipeline at the inaccessible section is determined by investigation of the forced circulation mode in the loop.**

The forced circulation mode in the loop with a relatively high flow rate shall be investigated to determine additional (in relation to the design value) flow resistance in the pipeline at the inaccessible section. Circulation is arranged by air supply to the vertical part of the riser pipeline.

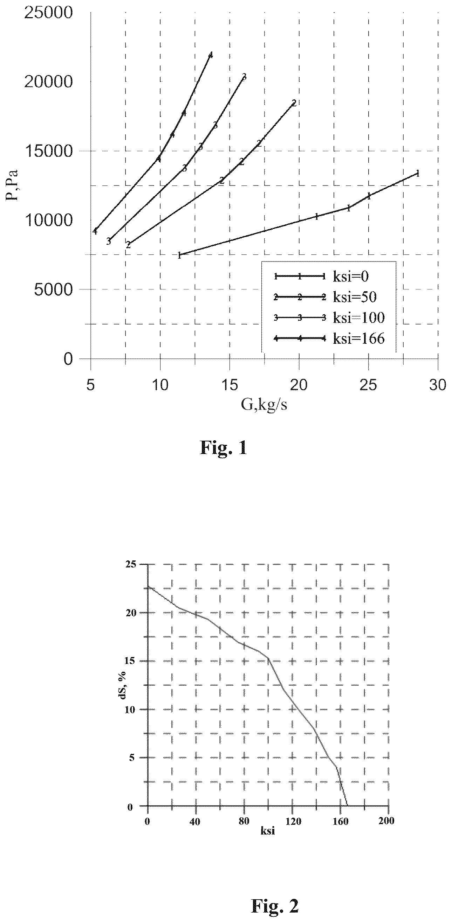

The calculations of this mode shall be performed at different additional resistance values. Subsequent to the calculation results a diagram (i.e. a set of curves in common axes) representing dependence of pressure differential at the inaccessible section $\Delta P$ from the water flow rate in the loop $G$ at different values of additional flow resistance $\zeta$ - from zero to the maximum permissible value (see **Fig. 1**) determined as per the limit curve (see **Fig. 2**) shall be plotted.

The following parameters shall be measured in the course of hydraulic testing: the water flow rate in the loop and pressure differential at the inaccessible section. Application of the above-mentioned dependence curves enables to determine the actual value of additional flow resistance in the loop according to the point on the plane $\Delta P$ and $G$ corresponding to the measured values of these parameters.

**The fraction of blocked tubes in relation to their total number in the heat exchanger is determined.**

For this purpose, heat exchange between the steam and air medium in the containment and water flowing through the heat exchanger shall be investigated. Special-purpose equipment shall be used to carry out thermal tests. Water from the EHRT is supplied to the heating tank with heating elements via a pipeline. In the course of the system operation water is heated in this tank up to the saturation temperature. The steam space of this heating tank is connected to the air space of the EHRT. Thus, if the damper on the pipeline between the water spaces of the EHRT and the heating tank is open they represent communicating vessels. The idea is to ensure stable temperature of the hot water supplied to the heat exchanger by boiling at constant pressure. Water from the heating tank is supplied to the riser pipeline of the containment PHRS via a pipeline. As both dampers of the containment PHRS are closed, water is supplied to the loop section with the heat exchanger. Water is cooled in the heat exchanger and supplied to the discharge line connected to the downpipe of the containment PHRS. Water from the discharge line is supplied to the special-purpose accumulator located in the system valve room.

Thus, both water movement through the heat exchanger and heat exchange with the containment medium are going on in the reverse direction as compared with the regular HE operation mode. In particular, water moves through the heat exchanger from the top downwards and has higher temperature than the containment medium.

Calculations of this mode at different quantities of the HE tubes, i.e. at different values of the operating fraction of the heat exchange surface area shall be performed. Subsequent to the calculation results a series of diagrams shall be plotted representing dependence of temperature differential $\Delta T_{in}$ the heat exchanger from the water flow rate G at different relative values of the "disabled" heat exchange surface area fraction, from zero to the maximum permissible value determined as per the limit curve (see **Fig. 2**).

Calculations of the maximum severe accident were performed with the use of computer codes. Operation of the containment PHRS in presence of the following destructive (i.e. deteriorating the system operation parameters) factors was modelled in these calculations: 1) blockage of the system pipeline, and 2) blockage of some heat exchanger tubes. The first of the above-mentioned factors is modelled by additional local flow resistance in the loop, and the second one, by "disabling" of some heat exchanger tubes.

On the basis of these calculations the limit curve shall be plotted in the coordinates of additional flow resistance in the loop $\zeta$ and the fraction of the "disabled" HE heat exchange surface area $\Delta S$. The limit curve represents the range of $\zeta$ and $\Delta S$ values when the maximum permissible value of pressure under the containment in the course of a severe accident is reached. In relation to the severe accident consequences the limit curve divides the entire range of $\zeta$ and $\Delta S$ values into the sub-range of permissible values (under the curve) and impermissible values (above the curve) - see **Fig. 2.**

Different diagrams of the above-mentioned series correspond to different values of the parameters; the data on these parameters shall be obtained in the course of measurements. These parameters include: water temperature at the heat exchanger inlet, air temperature in the containment, temperature and emissivity factor of the internal containment wall lining, temperature and emissivity factor of the outer surface of the HE tubes, water level in the tank. Evaluation of dependence of the calculation results from the relative air humidity in the containment showed that the impact of this parameter might be neglected.

During processing of the measurement results a diagram for which the values of the parameters are as close to the measured values as possible shall be selected from the series of diagrams. Application of the curves on this diagram will enable to determine the relative value of the "disabled" heat exchange surface area, and consequently the number of blocked heat exchange tubes according to the point on the plane $\Delta T$ and G corresponding to the measured values of these parameters.

**The data obtained at the previous stages are processed, and the state of the passive heat removal system for the internal containment volume is defined.**

The data on the loop resistance $\xi$ and the relative value of the "disabled" heat exchange surface $\Delta S$ obtained

in the course of testing shall be compared with the limit curve (see **Fig. 2).** If the point corresponding to the values of these parameters obtained subsequent to processing of the measurement data is below the limit curve, conclusion on the system capability to perform its functions may be made.

In case of unsatisfactory testing results from the viewpoint of the system operability additional examination of the heat exchanger tubes with the use of a thermal camera may be performed. For this purpose, inspection of the heat exchanger tubes shall be carried out in the thermal testing mode (when hot water is flowing through the heat exchanger tubes) with the use of a thermal camera in order to identify sections with relatively low heat emission. Presence of such section in any HE tube may indicate presence of any obstacles for free flow of liquid through this tube.

Processing of the data obtained at the previous stages and determination of the state of the passive heat removal system for the internal containment volume may be performed with the use of 3D modelling.

Description of modelling of coupled heat transfer under the conditions of free and mixed convection in the section of the containment PHRS heat exchanger is provided as an example.

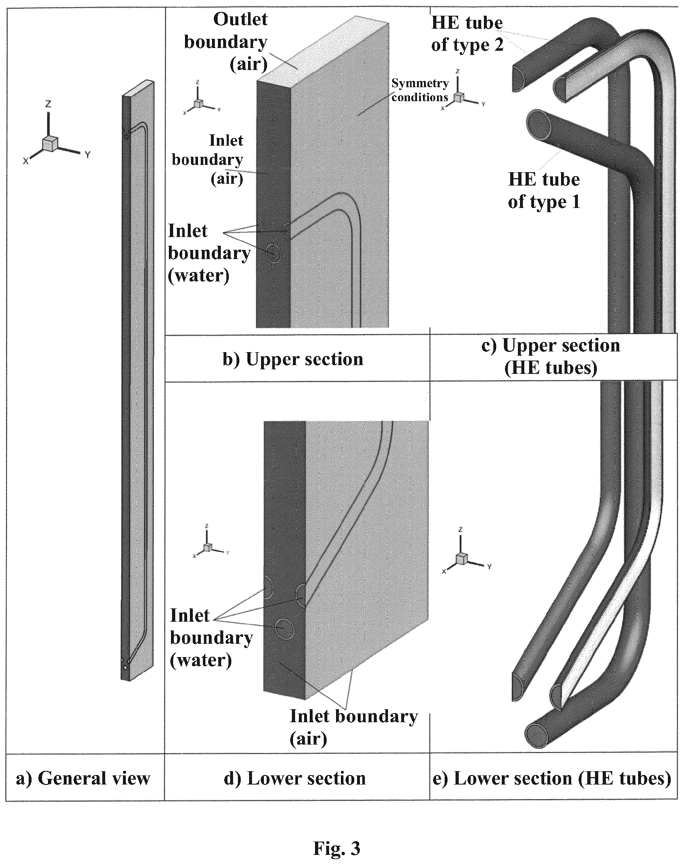

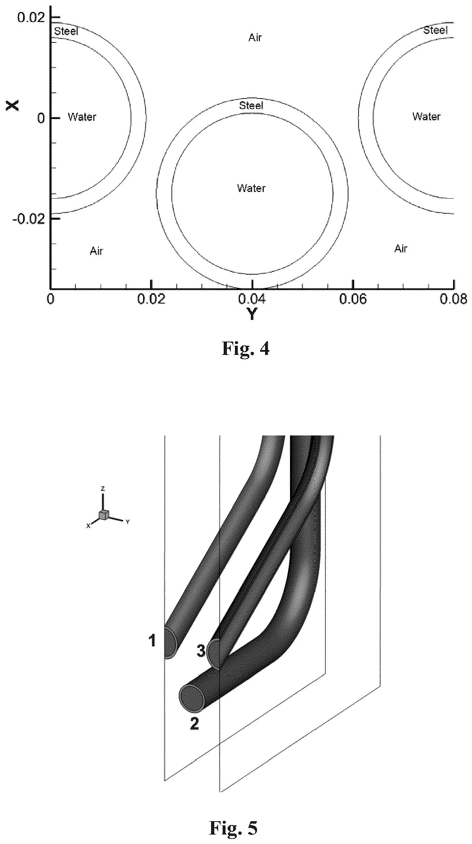

Due to symmetric position of the heat exchanger (HE) tubes the computational region represents a segment with a whole tube of type 1 and two halves of a HE tube of type 2 surrounded with air. Water with the specified velocity and temperature is supplied to the inlet boundaries of the HE tubes. Headers supplying water to the HE tubes are not taken into consideration. The computational region geometry is presented below in **Fig. 3.** The cross-section of the computational region is also presented below in **Fig. 4.**

The main geometrical characteristics of the computational region are given in **Table 1.**

**Table 1 - Geometrical characteristics of the computational region**

| Total length of a HE tube (with bends), m | Length of a vertical HE tube section, m | Inner diameter of a HE tube, m | Outer diameter of a HE tube, m | Thickness of a HE tube, m |
|---|---|---|---|---|
| 5.25 | 4.62 | 0.032 | 0.038 | 0.003 |

External boundaries of the computational region in the direction of Z axis are moved away by 3 calibers in the lower part and by 8 calibers in the upper part of the computational region.

Heated water is supplied to the HE tubes with the specified velocity and temperature. Water moves through the HE tubes in the direction opposite to Z axis (from the upper part of the computational region to the lower part) under the impact of forced flow and buoyancy forces in the gravity force field. Zero gage pressure is set at the outlet boundary of the tubes. In case of any counter flow at the outlet boundaries water is supplied with the average temperature at the outlet section of the tube.

The conjugating boundary conditions shall be set at the phase boundaries between air and steel tubes as well as steel tubes and water. This means equality of temperatures and heat fluxes at the phase boundaries.

Steel HE tubes heated by water heat the air which is in turn rises up in the direction of Z axis under the impact of buoyancy force in the gravity force field. Heat removal from the heated HE tubes takes place due to free convection. Zero gage pressure and the air temperature of $T_{amb.}$=30°C are set for the air at the inlet and outlet boundaries of the computational region.

Two options of water flow in the HE tubes are considered:

Water is supplied to all 3 tubes of the computational region.

Heated water is not supplied to one of the tubes.

The second option simulates potential inoperability of the HE tubes in case of any fouling, incorrect installation of the heat exchanger-condenser and other possible malfunctions. The parameters for the second option are obtained subject to the condition that the maximum possible percentage of the HE tube failures is 25% of the total number of tubes in a heat exchanger of the containment PHRS. Given that one heat exchanger - condenser of the containment PHRS contains 132 tubes (100%) the minimum possible number of tubes for the heat exchanger is 99 tubes (75%). The numeration of tubes within the computational region taken for convenience is presented in **Fig. 5.** The tube No. 3 will represent a disabled tube in the calculations.

The main parameters varying in the calculations include the total water flow rate in the system, i.e. the flow rate for the entire HE (132 tubes) and the water temperature at the inlet of the HE tubes. In this case calculation of velocity was performed in the options with a disabled tube due to the fact that the total water flow rate in the system remained constant. The option with the temperature at the HE tube inlet $T_{in}$ = 100°C was considered in the calculations.

Velocities at the tube inlet were obtained on the basis of the total flow rate in the system and the number of tubes. Velocities at the tube inlet were obtained as per the following formula:

$$V_{in} = \frac{G/N}{\rho_{in} \cdot S_{in}}$$

where G is the total flow rate in the system [kg/s], N is the number of HE tubes, $\rho_{in}$ is the water density [kg/m³], S is the inlet section area [m²].

Radiant heat exchange is taken into account only in the air medium and steel HE tubes. Radiation is not taken into account for the computational region inside the tubes. The emissivity factor of the external surfaces of the HE tubes and the external boundaries of the computational region was assumed to be $\varepsilon$=0.8.

The initial conditions for the air medium are the following: the zero-velocity field and the ambient temperature of $T_{amb.}$ = 30 °C. Zero velocity field for water at the temperature of $T_{in}$. The tube temperature is taken as $T_{in}$ of the water medium.

Flow and heat exchange in the air medium are characterized by the Grashof number Gr, and have the order of Gr ≈ 1011 for all modes under consideration which is a typical value for free convective turbulent flow. In this regard the free convective flow around the HE tubes is turbulent, and the semi-empirical standard $\kappa$-$\varepsilon$ turbulence model with expanded wall-adj acent functions is selected for closure of the Reynolds-averaged Navier-Stokes equations. Buoyancy forces are considered in the Boussinesq approximation.

Surface-to-Surface model (S2S) is selected for consideration of the radiative transfer.

The unstructured computational grid with the dimensions of 6.3 mln. cells was plotted for numerical modelling of coupled heat transfer with free and mixed convection.

All calculations were performed in non-stationary formulation. The time interval in the basic calculations was taken to be equal to 0.5 s. Navier-Stokes equations and the convective and diffusive heat transfer equations were solved with the use of Segregated Flow method. Calculations were performed with the second-order accuracy of space and time discretization. A task was deemed solved when the average temperature at the tube outlet and on the surface of the HE tubes came to a certain constant value.

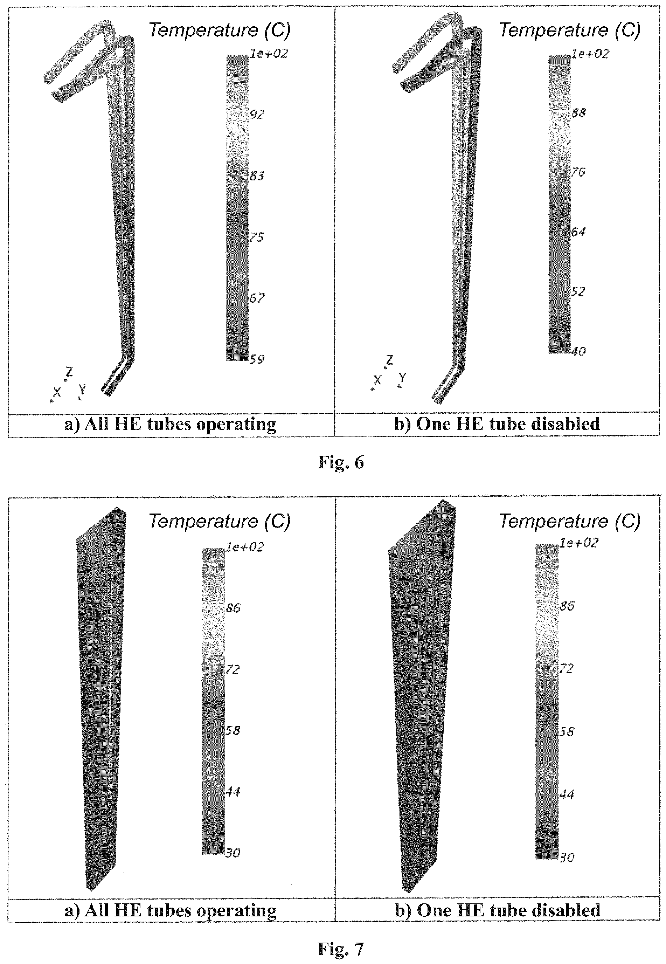

The calculation results for the temperature of 100 °C at the inlet of the HE tubes and for different mass flow rates are provided below. The velocity and temperature fields for one of the calculation options with the complete number of tubes and the option when water is not supplied to one of the tubes simulating inoperability of this tube are shown below in **Fig. 6-8.**

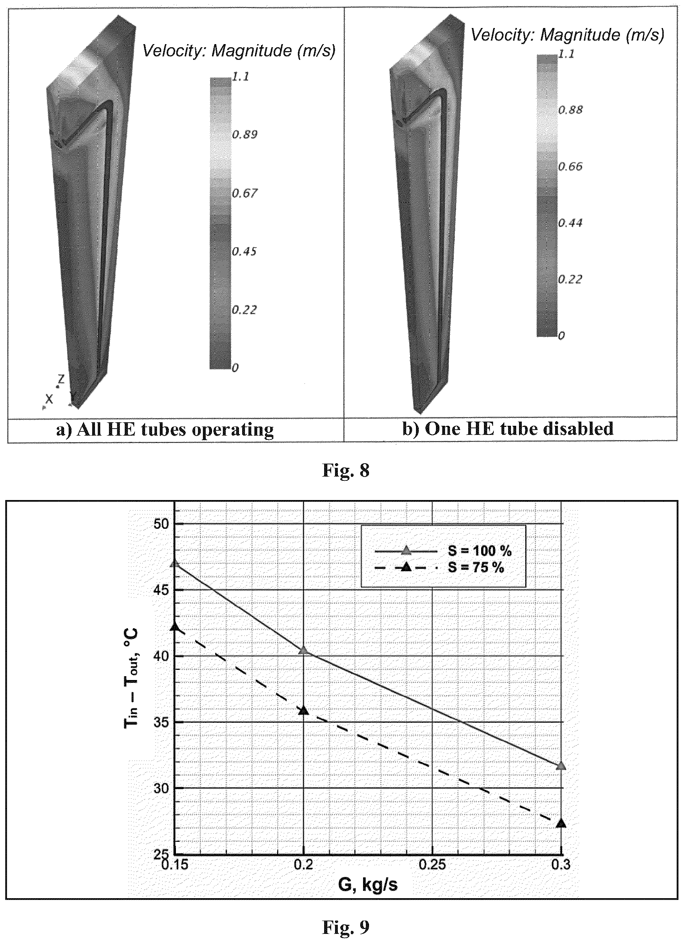

Dependence of temperature differential in the HE tubes from the water flow rate in the system is presented in **Fig. 9.** Specific heat fluxes on the surfaces of the HE tubes, the average temperatures as well as the heat exchange coefficient on the outer surface of the HE tube are provided below in **Table 2.**

**Table 2** - Calculation results for the water temperature of 100°C at the inlet of HE tubes

| Flow rate, kg/s | $\Delta T$, °C | Specific heat flux q (air), W/m2 | Specific heat flux q (water), W/m2 | Average temperature of the outer HE tube surface, °C | Average temperature of the inner HE tube surface, °C | Heat exchange coefficient on the outer HE surface, W/m2/K |
|---|---|---|---|---|---|---|
| 100% | | | | | | |
| 0.15 | 46.96 | 360 | 427 | 68.37 | 68.44 | 9.4 |
| 0.20 | 40.37 | 415 | 492 | 73.50 | 73.59 | 9.5 |
| 0.30 | 31.63 | 484 | 575 | 79.70 | 79.80 | 9.7 |
| 75% | | | | | | |
| 0.15 | 42.16 | 432 | 512 | 72.26 | 72.35 | 10.2 |
| 0.20 | 35.82 | 486 | 578 | 76.87 | 76.97 | 10.4 |
| 0.30 | 27.30 | 557 | 662 | 82.49 | 82.61 | 10.6 |

It can be seen from **Table 2** that in case of the flow rate increase in the system the specific heat flux on the inner and outer surfaces of the tubes also increases. Dependence of temperature differential in the heat exchanger tubes on the total flow rate in the system is shown in **Fig. 9.** It can be seen that in case of the flow rate increase in the system the temperature differential between the inlet and outlet decreases.

Disabling of a tube in the computational model at the inlet water temperature of 100 °C results in velocity increase in all other tubes. Thus, the water temperature at the tube outlet is higher, and the temperature differential for the option with a disabled tube is lower than for the calculation option with all HE tubes operating.

The temperature difference between two calculation options for the water temperature of 100 °C at the HE inlet (in case of the completely operating heat exchanger - condenser with 100% of the HE tube area and partially operating one with 75%) is approximately 5 °C.

According to one of the described technical solution embodiment options the passive heat removal system for the internal containment volume additionally comprises:

A) the following measuring devices for determination of additional flow resistance in the pipeline at the inaccessible section by investigation of the forced circulation mode in the loop

- Portable ultrasonic flow meter Fluxus ADM F601/ Flow velocity range 0.01-25 m/s. Volumetric flow rate measurement error 1% of the measured value. Two options of the flow meter installation are possible:

    Option with calibration. According to this option the expected place of the flow meter installation in the course of testing is a straight section of the downpipe in the containment PHRS valve room. Particular selection of the downpipe section is due to the fact that two-phase flow mode is implemented in the riser section in the course of hydraulic testing. Because of non-compliance of the actual flow rate measurement conditions with the regulatory requirements for the flow meter installation (insufficient length of the straight section) preliminary calibration of this device shall be performed for each system loop. Calibration shall be performed prior to testing with the use of the second (reference) flow meter which is installed in series with the first one but in such a place where the necessary requirements for its installation are met. The section of the downpipe of the system within the space between the containments is such a place. Calibration includes the following. The flow rate shall be measured in the hydraulic testing mode at several points of the operating flow rate range with the use of both devices simultaneously. A calibration curve shall be plotted on the basis of these measurements and further used for processing of the testing results. For any measurements in the course of testing the calibrated device shall be installed at the same place and in the same position as in the course of calibration. The flow meter installation place shall be recorded in the course of calibration and marked. It should be kept in mind that calibration curves for various system loops may be different as the geometry of the sections where the flow meter is installed is different for various loops. Option without calibration. According to this option the flow meter for measurements in the course of testing shall be installed at the downpipe section between the containments, i.e. at the same place which is used for installation of the reference (calibrating) device in the first option.

- Air blower with the capacity of 1000 l/ min (approximately 0.02 kg/s). Absence of any impurities, for example, oil vapors in the air supplied to the system is a prerequisite for the air blower use.
- The air line activating the above-mentioned blower, the air flow rate measuring device and an air valve for smooth adjustment of the air flow rate. The line shall be connected to the nozzle in the horizontal section of the bypass line of AA802 damper.
- Differential pressure gage for measurement of the pressure differential in the inaccessible section of the circulation loop.

For determination of additional flow resistance in the pipeline at the inaccessible section by investigation of the forced circulation mode in the loop:

1. The valves of the system and the air line shall be opened;
2. The air blower shall be switched on;
3. The air valve on the air line shall be opened and installed in the position corresponding to the water flow rate in the loop: 15÷20 kg/s;
4. The water flow rate in the loop shall be controlled in order to determine the moment of the stationary state reaching. The design time for the stationary state reaching is: 50 ÷ 100 s;
5. The following parameters shall be measured upon reaching of the stationary state: the air flow rate in the air line, the water flow rate in the loop, the water level in the PHRS tanks, the pressure differential in the inaccessible section;
6. The air valve on the air line shall be closed;
7. The air blower shall be switched off;
8. The valves of the system and the air line shall be closed.

B) for determination of the fraction of blocked tubes in relation to their total number in the heat exchanger the containment PHRS design shall include:

1) A heating tank partially filled with water and having electrical heating elements with the aggregate adjustable power of 0-75 kW. The steam space of the tank is connected to the air space of the EHRT with a pipeline. The water space of the heating tank is connected to the bypass line of the containment PHRS riser pipeline damper with a pipeline.

2) A discharge line including a receiving tank for the water drained from the system and flow rate measuring devices; The line is connected to the nozzle on the downpipe section of the system pipeline.

3) Water temperature measuring devices as well as an air valve on the discharge line for smooth adjustment of the water flow rate.

4) A pyrometer which, together with the means for direct measurement of the surface temperature of the HE tubes and the containment walls, is used to determine the emissivity factor of the above-mentioned surfaces.

5) Means for direct measurement of the surface temperature of the HE tubes and the containment walls.

6) Thermal camera used for additional investigations in case of any unsatisfactory results of the main testing.

For determination of the fraction of blocked tubes in relation to their total number in the heat exchanger:

1. The valves connecting the EHRT and the electric heaters shall be opened;

2. The water level in the heating tank shall be measured. In case of the level value close to the nominal one the electrical heating elements shall be switched on; the aggregate power of the electric heaters shall be set at the level of: 75 kW;

3. The water temperature in the heating tank shall be measured periodically. Upon reaching of the temperature of: 100 °C the discharge line valves shall be opened. The air valve on the discharge line shall be installed in the position corresponding to the water flow rate in the discharge line of: 0.2 kg/s;

4. The temperature at the HE inlet and outlet shall be controlled in order to determine the moment of the stationary state reaching. The design time for the stationary state reaching from the heating start moment (activation of electric heaters) is approximately: 10 000 ÷ 12 000 s;

5. The following parameters shall be measured upon reaching of the stationary state. The water flow rate, level and temperature in the PHRS tanks, the water temperature at the HE inlet and outlet, the water temperature downstream of the heater, the medium temperature in the containment, the water temperature and level in the heating tank. The following parameters shall be also measured (see Footnote **Error! Bookmark not defined.** in Section **Error! Reference source not found.):** the surface temperature of the HE tubes: direct (contact) measurements and measurements with the use of a pyrometer (non-contact); the surface temperature of the containment walls: direct (contact) measurements and measurements with the use of a pyrometer (non-contact);

6. The electrical heating elements shall be switched off;

The valves of the heating line and the discharge line shall be closed.

It is obvious for a person skilled in the art that the particular embodiment options for monitoring of the passive heat removal system for the internal containment volume and the device for its implementation have been described here for the illustrative purposes, and various modifications within the framework and substance of the technical solution are permissible.

**Claims**

1. A method for monitoring a passive heat removal system for the internal containment volume **characterized in that**:

• visual examination of the system for presence of any external damages is performed;

• the passive heat removal system loop is divided into two sections: accessible and inaccessible for inspection with the use of visual control means;

• the internal areas of individual pipeline sections are examined with the use of a mobile remote video camera;

• additional flow resistance in the pipeline at the inaccessible section is determined by investigation of the forced circulation mode in the loop;

• the fraction of blocked tubes in relation to their total number in the heat exchanger is determined;

• the data obtained at the previous stages are processed, and the state of the passive heat removal system for the internal containment volume is defined.

2. The method according to Claim 1 **characterized in that** the contribution of the corrosive component is evaluated.

3. The method according to Claim 1 **characterized in that** data processing is performed with the use of 3D modelling.

4. A device for embodiment of the method for monitoring a passive heat removal system for the internal containment volume including at least one cooling water loop comprising: a heat exchanger located inside the containment and including the upper and lower headers connected with heat exchange tubes, riser pipeline and downpipe connected to the heat exchanger, a cooling water storage tank located above the heat exchanger outside the containment and connected to the downpipe, a steam dump valve connected to the riser pipeline, located in the water storage tank and hydraulically linked to the latter, **characterized in that** it additionally comprises: a heating tank with electrical heating elements partially filled with water, a discharge line including a receiving tank for the water drained from the system, devices for measurement of the water flow rate in the loop and pressure differential measurement devices.

**Fig. 1**

**Fig. 2**

Outlet boundary (air)

Inlet boundary (air)

Symmetry conditions

Inlet boundary (water)

HE tube of type 2

HE tube of type 1

b) Upper section

c) Upper section (HE tubes)

Inlet boundary (water)

Inlet boundary (air)

a) General view

d) Lower section

e) Lower section (HE tubes)

Fig. 3

Fig. 4

Fig. 5

Temperature (C)

a) All HE tubes operating | b) One HE tube disabled

Fig. 6

Temperature (C)

a) All HE tubes operating | b) One HE tube disabled

Fig. 7

a) All HE tubes operating    b) One HE tube disabled

Fig. 8

Fig. 9

**INTERNATIONAL SEARCH REPORT**

| International application No. |
|---|
| PCT/RU 2021/000619 |

**A. CLASSIFICATION OF SUBJECT MATTER**
G21C 15/00 (2006.01); G21C 17/10 (2006.01); G06F 30/17 (2020.01)

According to International Patent Classification (IPC) or to both national classification and IPC

**B. FIELDS SEARCHED**

Minimum documentation searched (classification system followed by classification symbols)
G21C 15/00, 17/00, 17/10

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | RU 2595639 C2 (AKTSIONERNOE OBSCHESTVO "NAUCHNO-ISSLEDOVATELSKY I PROEKTNO-KONSTRUKTORSKY INSTITUT ENERGETICHESKIKH TEKHNOLOGY "ATOMPROEKT" ("AO "ATOMPROEKT")) 27.08.2016 | 1-4 |
| A | RU 85029 U1 (OTKRYTOE AKTSIONERNOE OBSCHESTVO "SANKT-PETERBURGSKY NAUCHNO-ISSLEDOVATELSKY I PROEKTNO-KONSTRUKTORSKY INSTITUT "ATOMENERGOPROEKT" (OAO "SPBAEP") et al.) 20.07.2009 | 1-4 |
| A | RU 2302674 C1 (FEDERALNOE GOSUDARSTVENNOE UNITARNOE PREDPRIIATIE "NAUCHNO-ISSLEDOVATELSKY, PROEKTNO-KONSTRUKTORSKY I IZYSKATELSKY INSTITUT "ATOMENERGOPROEKT ", FGUP "ATOMENERGOPROEKT" et al.) 10.07.2007 | 1-4 |
| A | RU 2082226 C1 (OPYTNOE KONSTRUKTORSKOE BIURO MASHINOSTROENIIA) 20.06.1997 | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 May 2022 (17.05.2022) | 02 June 2022 (02.06.2022) |

| Name and mailing address of the ISA/ RU | Authorized officer |
|---|---|
| Facsimile No. | Telephone No. |

Form PCT/ISA/210 (second sheet) (April 2005)

**INTERNATIONAL SEARCH REPORT**

| | International application No. |
| --- | --- |
| | PCT/RU 2021/000619 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | WO 2017/028201 A1 (CHINA NUCLEAR POWER ENGINEERING CO., LTD. et al.) 23.02.2017 | 1-4 |
| A | WO 2016/089249 A1 (JOINT STOCK COMPANY SCIENT RES AND DESIGN INST FOR ENERGY TECHNOLOGIES ATOMPROEKT JSC ATOMPROEKT) 09.06.2016 | 1-4 |
| A | CN 105070335 A (TSINGHUA UNIVERSITY) 18.11.2015 | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2302674
- RU 85029
- RU 2595639